# FASCICULE DE BREVET EUROPEEN

(11) **EP 2 708 709 B1**
(45) Date de publication et mention de la délivrance du brevet: **29.06.2016**
(21) Numéro de dépôt: 13182064.9
(22) Date de dépôt: 28.08.2013
(51) Int. Cl.: F01N 3/20, F01N 3/035, B01J 37/02, B01J 35/04, F01N 3/022, B01J 23/46, B01J 23/63, B01D 53/94

(54) **Ligne déchappement avec dispositif de traitement des émissions polluantes d'un moteur thérmique par reduction catalytique, s'affranchissant de réducteur embarque**
Abgasanlage mit einer Vorrichtung zur Aufbereitung von umweltschädlichen Emissionen eines Wärmekraftmotors durch katalytische Reduktion, unabhängig von der an Bord befindlichen Reduktionsvorrichtung
Exhaust system with a device for treating polluting emissions of a heat engine by catalytic reduction which does not require an on-board reducer

(30) Priorité: 13.09.2012 FR 1258618
(43) Date de publication de la demande: 19.03.2014
(73) Titulaire: PEUGEOT CITROËN AUTOMOBILES SA, 78140 Vélizy-Villacoublay (FR)
(72) Inventeur: MATTHESS, Nils, 92300 Levallois Perret (FR); BERTIN, Thierry, 92250 La Garenne Colombes (FR)

(56) Documents cités:
- DE-A1-102009 056 681
- US-A1- 2007 289 296
- US-B1- 7 062 904

## Description

Le contexte de l'invention est celui de la dépollution automobile et plus précisément celui de la réduction des émissions polluantes issues des moteurs, notamment Diesel, telles que les émissions de monoxyde de carbone (CO), d'hydrocarbures imbrûlés (HC) et d'oxydes d'azote (NOx).

Les normes en matière d'émissions polluantes verront l'introduction de nouveaux cycles d'homologation mesurant l'efficacité des systèmes de dépollution dans des conditions de fonctionnement du moteur très variées, telles qu'un démarrage à froid, un roulage urbain lent et une conduite agressive. Or, dans certaines de ces conditions, la température dans la chambre de combustion augmente, favorisant les émissions de NOx indésirables (mécanisme de Zeldovich dit de "NO thermique"), leur faisant atteindre des quantités difficiles à traiter.

Aujourd'hui, le dispositif préféré pour le traitement des émissions polluantes d'un moteur Diesel est le catalyseur d'oxydation ou DOC, mais il est susceptible de ne respecter que partiellement ces normes. Il est certes efficace pour traiter les émissions de monoxyde de carbone (CO) et d'hydrocarbures imbrûlés (HC) quand il est en température (i.e. > 150 - 200°C) mais pas lors d'un démarrage àfroid. Et, concernant les émissions d'oxydes d'azote (NOx) qui peuvent être très élevées en conduite agressive et donc plus problématiques à traiter, il est totalement inefficace.

Il est donc connu, notamment du document US 2011/0162347, de coupler le DOC avec un dispositif supplémentaire permettant de traiter ces émissions de NOx :

Deux types de ces dispositifs supplémentaires sont utilisés couramment :
- un piège à NOx avec traitement des NOx piégés pour les transformer en espèces non polluantes comme N₂, ou
- un catalyseur SCR (acronyme anglais pour Selective Catalytic Reduction, soit en français Réduction catalytique sélective), qui transforme les NOx en N₂ de manière continue grâce à un réducteur spécifique qui peut être constitué d'hydrocarbures ou bien de l'ammoniac (NH₃), ou encore un réducteur intermédiaire (liquide ou gazeux) qui générera de l'ammoniac (NH₃) in fine dans ce catalyseur.

On préfère ce dernier dispositif au piège à NOx car il reste efficace même au-delà de 450°C.

Malgré tout, un catalyseur SCR ne permet pas de traiter de manière efficace les émissions de NOx en quantité importante sur toute la gamme de conditions de fonctionnement du moteur prévue par les normes à venir sans consommer des quantités très élevées de réducteur embarqué dans le véhicule.

Une solution envisagée est de faire l'appoint en réducteur entre deux révisions du véhicule mais cet appoint serait alors réalisé par le client, avec des risques de négligence ou d'oubli, et les constructeurs automobiles devraient, en outre, supporter le surcoût et les inconvénients d'un système de remplissage via une goulotte facilement accessible (trappe à carburant...).

Il n'existe donc pas de solution simple pour couvrir la totalité du champ de fonctionnement moteur en termes de traitement des NOx sans avoir à augmenter considérablement le volume embarqué d'additif (réducteur SCR), ce qui représente une augmentation du coût et des contraintes d'encombrement dans le véhicule ou à demander au client de faire l'appoint lui-même.

Par ailleurs, il est nécessaire de régénérer le filtre à particules de manière périodique (tous les 600 à 1000km classiquement) car ce dernier voit sa contre-pression induite augmenter au fur et à mesure du stockage des particules en son sein. Pour réaliser correctement cette régénération, la méthode la plus classique est basée sur la combustion des suies par une élévation de la température des gaz d'échappement à l'entrée du filtre. Cette opération nécessite la présence d'une catalyse dite de régénération. Dans les moteurs Diesel, c'est la post-injection tardive qui aide à la régénération du filtre en envoyant une grande quantité de gazole imbrûlé dans le catalyseur où il va s'enflammer, afin d'élever de façon significative la température des gaz d'échappement pour activer l'oxydation des suies piégées dans le filtre. Ces filtres nécessitent toutefois l'ajout d'une phase catalytique de régénération (généralement à base de platine) qui est déposé dans et sur les parois filtrantes, afin d'abaisser la température de combustion des suies contenues dans le filtre et faciliter la régénération de ce dernier, ce qui augmente considérablement leur coût.

Et, dans le cas des filtres dépourvus d'une phase catalytique de régénération, un additif d'aide à la régénération (au fer, au cérium voire au fercérium...) est aujourd'hui indispensable dans le carburant pour abaisser la température de combustion des suies à 450°C et rendre cette régénération non seulement possible mais efficace. Si son efficacité n'est pas contestable, son coût et l'encombrement lié à son stockage à bord du véhicule n'en demeurent pas moins de gros inconvénients.

Il n'existe donc pas, à ce jour, de solution pour supprimer à la fois l'additif d'aide à la régénération du filtre à particules (dans le cas de filtres dépourvus d'une phase catalytique de régénération) et le réducteur embarqué dans le véhicule qui alimente la catalyse SCR. Il est par ailleurs connu du document DE10 2009 056 681 un traitement des NOx par réduction catalytique avec de l'ammoniac, qui utilise plusieurs revêtements catalytiques pour générer de l'hydrogène et de l'ammoniac.

L'invention vise à pallier ces inconvénients.

A cet effet, l'invention concerne un dispositif formant un filtre à particules (solides) et un catalyseur d'élimination des oxydes d'azote contenus dans un mélange gazeux issu d'un moteur thermique d'un véhicule automobile, et véhiculé vers une sortie d'échappement du véhicule, comprenant un catalyseur SCR mettant en oeuvre une réduction catalytique sélective des oxydes d'azote par un réducteur, qui comprend, en amont du catalyseur SCR dans le sens de cheminement des gaz depuis le moteur vers la sortie d'échappement du véhicule, un catalyseur de formation du réducteur des oxydes d'azote à partir du mélange gazeux à traiter et une source d'hydrocarbures craqués.

L'invention permet ainsi, par la production in situ de réducteur, de respecter les normes de rejet d'émissions polluantes fixées pour des conditions de fonctionnement du moteur très variées, en s'affranchissant de tout réducteur embarqué et de tout additif d'aide à la régénération du filtre à particules.

Avantageusement, mais facultativement, le dispositif comprend au moins l'une des caractéristiques techniques suivantes :
- le filtre à particules comprend des parois poreuses de filtration des particules solides, le catalyseur SCR et le catalyseur de formation du réducteur étant imprégnés sur au moins certaines des parois poreuses du filtre ;
- le filtre à particules comprend des canaux entrants et des canaux sortants en alternance deux à deux, un canal entrant étant séparé du canal sortant adjacent par l'une des parois poreuses du filtre, la couche de la paroi de séparation la plus proche du canal entrant étant imprégnée du catalyseur de formation du réducteur, et la couche de la paroi de séparation la plus proche du canal de sortie étant imprégnée du catalyseur SCR ;

- le catalyseur de formation du réducteur est un catalyseur de formation d'hydrogène H₂. ;
- le catalyseur de formation d'hydrogène H₂ comprend du rhodium déposé sur des oxydes de cérium ou sur tout autre support réductible ; et
- le catalyseur SCR comprend des zéolithes échangées au fer, au cuivre, et/ou des oxydes acides simples ou mixtes tels que des zircones acides.

L'invention vise également une ligne d'échappement d'un véhicule automobile à moteur thermique, permettant l'évacuation d'un mélange gazeux produit par le moteur en fonctionnement, comprenant un catalyseur d'oxydation, et, disposée en aval de ce catalyseur d'oxydation dans le sens de cheminement des gaz depuis le moteur vers la sortie d'échappement du véhicule, un filtre à particules tel que défini précédemment ainsi qu'une source d'hydrocarbures craqués interposée entre le catalyseur d'oxydation et le filtre à particules.

Avantageusement, mais facultativement, la ligne d'échappement selon l'invention comprend au moins l'une des caractéristiques techniques suivantes :
- la source d'hydrocarbures craqués comprend un brûleur ;
- elle comprend un substrat disposé en amont du filtre à particules dans le sens de cheminement des gaz depuis le moteur vers la sortie d'échappement du véhicule, imprégné d'un catalyseur de production du réducteur.

D'autres caractéristiques et avantages de l'invention apparaîtront lors de la description suivante faite en référence aux dessins annexés :
- la figure 1 est une vue schématique d'un dispositif de filtre à particules selon l'invention ;
- la figure 2 est un agrandissement de la zone du filtre repérée par "II" sur la figure 1 ;
- la figure 3 est un agrandissement de la zone repérée par "III" sur la figure 2 ;
- la figure 4 illustre schématiquement un moteur thermique et une ligne d'échappement d'un véhicule automobile munie du filtre à particules de la figure 1, selon un premier mode de réalisation,
- la figure 5 illustre schématiquement un moteur thermique et une ligne d'échappement d'un véhicule automobile munie du filtre à particules de la figure 1, selon un second mode de réalisation.

La réduction catalytique sélective ou catalyse SCR permet de traiter les NOx en les faisant réagir avec un réducteur tel que de l'ammoniac gazeux NH₃ suivant les équations chimiques suivantes :

| | |
|---|---|
| (1b) 4 NO + O₂ + 4 NH₃ → 4 N₂ + 6 H₂O | (SCR standard) |
| (2b) NO + NO₂ + 2 NH₃ → 2 N₂ + 3 H₂O | (SCR à cinétique rapide) |
| (3b) 6 NO₂ + 8 NH₃ → 7 N₂ + 12 H₂O | (SCR haute température) |

Dans le cas où le réducteur n'est pas de l'ammoniac gazeux mais un réducteur intermédiaire tel qu'une solution liquide comme de l'urée, il faut transformer l'urée en NH₃ d'abord par thermolyse puis par hydrolyse :

| | |
|---|---|
| (4b) (NH₂)₂CO → NH₃ + HNCO | Thermolyse de l'urée |
| (5b) HNCO + H₂O → NH₃ + CO₂ | Hydrolyse de l'acide isocyanique |

Cette transformation de l'urée en NH₃ nécessite que les gaz d'échappement à traiter aient atteint une température supérieure à 180 à 200°C.

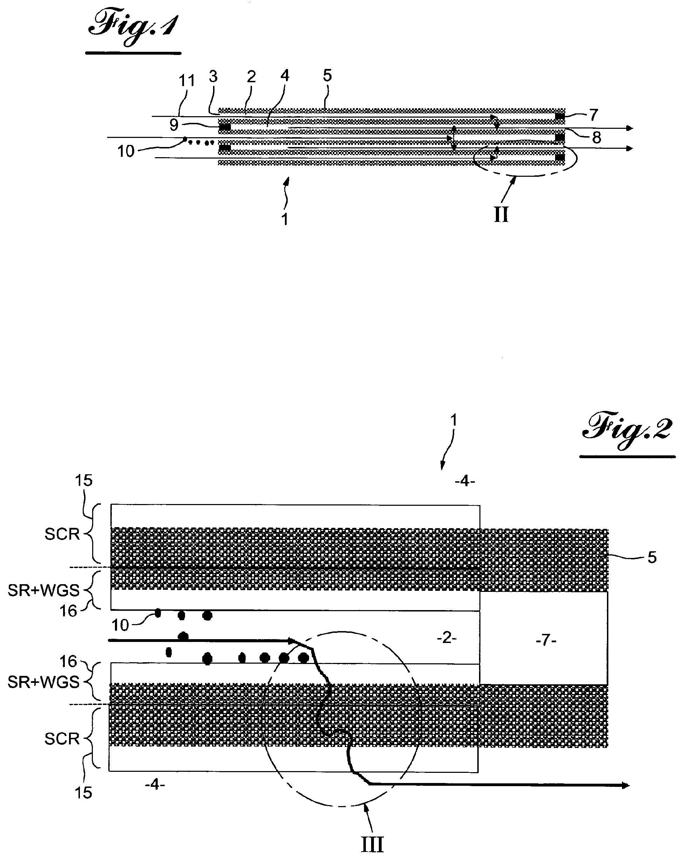

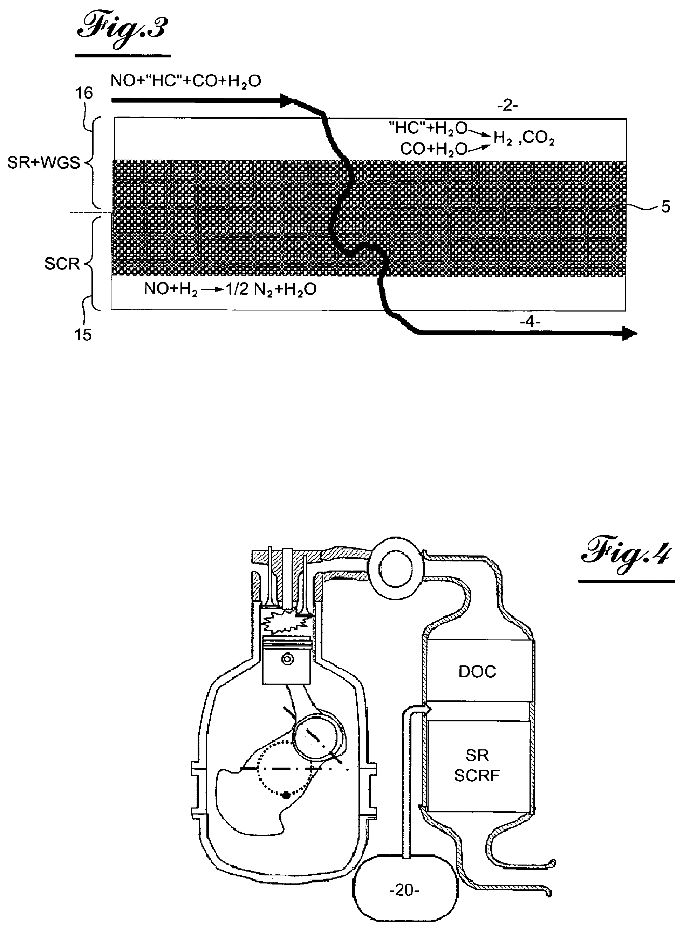

En intégrant au filtre à particules un catalyseur SCR, on rend possible le respect de normes sur les émissions polluantes avec une architecture très compacte : une première "brique" catalyseur d'oxydation DOC, telle que représentée sur la figure 4 qui catalyse les réactions d'oxydation du CO et des hydrocarbures ("HC") et une seconde "brique" filtre à particules imprégné du catalyseur SCR (SCRF), schématiquement représenté sur la figure 4 et dans le détail sur la figure 1 ou 2, qui assure à la fois la réduction des NOx et la filtration de particules solides 10 par des parois poreuses.

Lorsque la catalyse SCR est imprégnée sur un filtre à particules, elle est déposée sur les parois du filtre à particules et le réducteur gazeux (NH₃) ou un réducteur liquide permettant de former du NH₃ gazeux est injecté en amont du filtre à particules et en aval du DOC dans le sens d'écoulement des gaz formés par le moteur vers l'échappement (figure 4).

Un filtre à particules, tel que celui repéré par 1 sur la figure 1, comprend des canaux entrants 2 où le mélange gazeux à traiter est admis par une entrée 3, l'extrémité opposée du canal étant obturée par un bouchon imperméable au gaz 7, et des canaux sortants 4 par lesquels le mélange gazeux traité est délivré par une sortie 8, l'extrémité opposée du canal sortant étant bouchée par un bouchon obturateur 9. Les canaux entrants 2 et les canaux sortants 4 sont superposés en alternance deux à deux, chaque canal entrant 2 étant séparé du canal sortant adjacent 4 par une paroi poreuse 5 pouvant être imprégnée d'un catalyseur. Le mélange gazeux 11 admis dans les canaux entrants 2 est contraint de traverser les parois poreuses 5 pour atteindre les canaux sortants 4 en raison des bouchons 7 obturant les canaux entrants 2, et il est impossible pour le mélange gazeux qui atteint les canaux sortants 4 de retourner vers le moteur en raison des bouchons 9 obturant les canaux sortants. Ils ne peuvent être véhiculés une fois traités que vers la sortie d'échappement.

Le fait que la catalyse SCR soit en position rapprochée du moteur puisque disposée au sein du filtre à particules, permet de compenser l'inertie thermique du média filtrant du filtre à particules comparativement à celle d'un support en cordiérite typique de la catalyse automobile qui serait situé à un emplacement plus éloigné du moteur (et ce, même si le média filtrant du filtre à particules est en cordiérite).

Il faut toutefois savoir que le catalyseur SCR imprégnant le filtre n'est pas capable de traiter efficacement les émissions de NOx issues du moteur, tant que la température des gaz d'échappement n'a pas atteint 150 à 200°C.

La catalyse SCR est donc efficace pour des températures supérieures à au moins 150°C.

Mais son efficacité est également liée à la quantité relative de réducteur par rapport à celle des NOx à traiter : plus la quantité de NOx à traiter est importante, plus celle de réducteur à injecter l'est aussi.

Cependant, il n'est pas satisfaisant d'avoir un réducteur embarqué dans le véhicule.

De même, pour régénérer le filtre à particules, il est coûteux de le doter d'une imprégnation catalytique permettant d'aider à la régénération. Lorsque l'on décide de ne pas munir le filtre d'une telle imprégnation catalytique, il est peu pratique de devoir prévoir et gérer un système additionnel permettant d'ajouter dans le carburant un additif d'aide à la régénération du filtre.

Le coeur de l'invention réside justement dans le fait de générer un réducteur au sein même du filtre à particules, à partir d'espèces présentes dans les gaz d'échappement, et d'une source d'hydrocarbures craqués, et qui viendra non seulement remplacer le réducteur embarqué des systèmes existant, et évitera en outre l'emploi d'un additif d'aide à la régénération du filtre à particules.

Les véhicules dont les lignes d'échappement seront munies d'un filtre à particules de ce type pourront ainsi respecter les normes en matière d'émissions polluantes y compris celles prévoyant des conditions de fonctionnement du moteur extrêmes telles qu'une conduite agressive, sans nécessiter de réducteur embarqué dans le véhicule, ni d'additif d'aide à la régénération dans le carburant.

A cet effet, l'invention prévoit qu'une source d'hydrocarbures craqués soit disposée en amont du filtre à particules et que ce filtre soit imprégné, en plus d'un catalyseur SCR, d'un catalyseur de production du réducteur utilisé dans la catalyse SCR, à partir des hydrocarbures craqués de la source.

La configuration dans laquelle s'intègre le filtre à particules (SCRF) selon l'invention est la suivante :
MOTEUR -> DOC -> BRULEUR -> SCRF -> ECHAPPEMENT

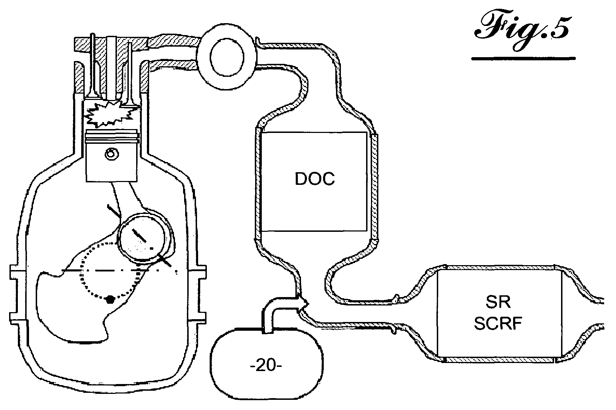

La source d'hydrocarbures craqués est selon un mode de réalisation préféré, un brûleur 20, connecté à l'échappement (figures 4 et 5), le filtre à particules étant soit intégré à la sortie du turbo en aval d'un catalyseur d'oxydation DOC (figure 4) soit plus éloigné du turbo, sous le plancher du véhicule (figure 5).

Le brûleur envoie en les craquant des hydrocarbures qui sont, lorsque craqués, beaucoup plus réactifs et prompts à former par vaporéformage sous l'action du catalyseur de production de réducteur, du dihydrogène, c'est-à-dire le réducteur justement privilégié de la catalyse SCR.

En outre, le brûleur 20 assure une seconde fonction qui est le thermomanagement du filtre à particules 1.

En effet, au lieu de mettre dans le carburant un additif type cérium, fer ou un mélange cérium-fer, pour aider la régénération des suies stockées dans le FAP par abaissement de la température de combustion des suies de 100°C environ, le brûleur 20 permet d'augmenter par la combustion des HC, la thermique du média filtrant aussi souvent que nécessaire pour atteindre la température non abaissée de combustion des suies et nettoyer le FAP.

Il existe différents types de brûleur sur le marché. Ses caractéristiques seront à adapter aux contraintes technico-économiques du constructeur automobile.

Selon un mode de réalisation préféré de l'invention, seuls les canaux sortants du filtre à particules sont imprégnés du catalyseur SCR et seuls les canaux entrant de ce filtre sont imprégnés d'un catalyseur permettant la formation du réducteur, qui est donc idéalement de l'hydrogène H₂.

L'hydrogène, H₂ a été choisi à dessein car son pouvoir réducteur est nettement plus élevé que celui des HC et même que celui du CO. D'ailleurs, la SCR par les HC n'est pas très efficace et on lui préfère de loin celle par NH₃.

Une fois que l'hydrogène est produit dans les canaux entrants, il traverse les parois du filtre pour atteindre les canaux sortants, afin de réduire les NOx sur les sites catalytiques imprégnés sur ces canaux sortants, selon la réaction suivante (3) :

*(3)* *NO + H*₂ *→* ½ *N*₂ *+ H*₂*O*

L'imprégnation des canaux entrant du FAP est une imprégnation catalytique permettant de produire de l'hydrogène lorsque les conditions de température et de richesse sont réunies.

Plus précisément, en référence aux figures 2 et 3, la paroi 5 séparant un canal sortant 4 du canal entrant adjacent 2 est pourvue d'une double imprégnation : une première épaisseur 15 de cette paroi, la plus proche du canal sortant 4, est imprégnée du catalyseur SCR et une deuxième épaisseur 16, la plus proche du canal entrant 2, est imprégnée d'un ou de plusieurs catalyseurs permettant le vaporéformage des hydrocarbures et/ou la réaction de "gaz à l'eau" formant également de l'hydrogène mais à partir de CO.

Dans l'exemple représenté, l'imprégnation SCR est effectuée sur environ 2/3 de l'épaisseur de la paroi du filtre et l'imprégnation permettant de fabriquer H₂ sur le 1/3 d'épaisseur restante mais la répartition entre les deux imprégnations peut être optimisée en fonction de l'efficacité recherchée et des contraintes techniques.

Cette structure particulière du filtre à particules permet, conformément à la figure 3, de traiter un mélange gazeux contenant des oxydes d'azote NOx qui est admis dans le canal entrant 2 dans un premier temps, traverse la portion 16 de la paroi de séparation 5 imprégnée par les catalyseurs permettant de produire H₂ à partir des hydrocarbures et/ou du CO, puis dans un second temps, le mélange gazeux additivé du H₂ venant d'être produit traverse la portion restante 15 de la paroi de séparation 5 imprégnée de catalyseur SCR permettant la réaction des oxydes d'azote du mélange gazeux avec H₂ juste produit. Le mélange gazeux débarrassé des NOx est alors évacué vers la sortie d'échappement.

La production d'hydrogène, est réalisée par le vaporéformage des hydrocarbures (HC) appelé également " Steam Reforming " (SR) :

*(1)* *CₓH_{y} + 2xH₂O → xCO₂ +(2x+^{y}*/*₂)H*₂

Pour produire H₂ par cette réaction, il faut par conséquent disposer d'hydrocarbures imbrûlés HC en grande quantité..

Ces hydrocarbures sont produits par injection de carburant dans la ligne, qui est ensuite décomposé et transformé en H₂ conformément à la réaction (1) ci-dessus.

La réaction (1) nécessite de la température pour être efficace (400 à 500°C pour le vaporéformage des HC et donc la production de l'hydrogène) et c'est pourquoi l'imprégnation dédiée au vaporéformage des hydrocarbures est positionnée préférentiellement sur et dans les parois des canaux entrants, l'imprégnation de catalyse SCR étant positionnée sur et dans les canaux sortants du filtre.

Ainsi, les quantités importantes de NOx émises lors des fortes charges générées par exemple par une conduite agressive, seront traitées par l'hydrogène produit in situ (dans le FAP).

Un exemple de filtre à particules à catalyse SCR selon l'invention comprend idéalement :
- une structure à canaux entrants et sortants constituée d'un média filtrant en carbure de silicium (SiC), en cordiérite, en mullite, en aluminate de titane, métallique ou autres,
- les canaux sortants du filtre sont imprégnés en surface ou dans leur épaisseur d'un catalyseur SCR du type zéolithes échangées (au fer, au cuivre ou autres) ou du type oxydes acides simples ou mixtes (par exemple : zircones acides) ou autres
- les canaux entrants sont imprégnés en surface ou dans leur épaisseur d'un catalyseur type « vaporéformage » du type Rhodium sur oxydes de cérium ou sur tout autre support réductible,

Une variante de réalisation de l'invention pourrait être d'inclure au système décrit ci-dessus, un catalyseur de vaporéformage des hydrocarbures (SR) sur un substrat séparé et en amont du SCRF. Ce catalyseur SR pourrait être placé dans la ligne d'échappement ou dans une autre variante dans la tuyauterie de connexion du brûleur à la ligne d'échappement. Il permettrait d'augmenter la quantité d'hydrogène produit. La solution d'ajout d'un brûleur en amont du filtre à particules et d'une imprégnation catalytique de production d'hydrogène à partir des hydrocarbures produits par le brûleur dans les canaux entrants du filtre, présente un grand nombre d'avantages dont :
- le fait de rendre indépendant du moteur, la régénération du FAP (plus besoin de post-injection avec des risques de dilution de l'huile notamment) du fait de la présence du brûleur qui pourra assurer cette fonction d'élévation de la température,
- le fait de réduire le coût du DOC puisqu'il ne devra plus assurer les exothermes permettant la régénération des suies (il faut, en effet, ajouter des métaux précieux au DOC pour augmenter son efficacité à traiter les surémissions d'HC lors des post-injections et générer de fait des exothermes permettant au FAP de se régénérer)
- le fait de laisser le FAP sous caisse à un endroit favorable à son implantation (la tendance est, en effet, de rapprocher les systèmes de dépollution du moteur pour gagner de la température mais la place manque sous le turbo, ce qui contraint fortement l'architecture de la ligne d'échappement), rendant la proposition d'architecture de la figure 5 plus pratique en termes de mise en oeuvre,
- le fait de supprimer le réservoir de réducteur embarqué dans le véhicule et tout le système d'alimentation avec des gains significatifs en termes de coût, de stockage, de montage, etc..
- le fait de réduire le volume du FAP puisque l'on ne sera plus limité par les cendres résiduelles de l'additif qui s'accumulent dans le volume libre du média filtrant,
- le fait de ne plus avoir à nettoyer le FAP puisque l'on aura supprimé l'additif d'aide à la régénération.

Le brûleur pourra également assurer une fenêtre de température optimale pour la SCR en mettant très rapidement en température le filtre à particules et son catalyseur SCR. Le gain, en sus de la suppression du réducteur embarqué qui est remplacé par l'hydrogène produit in situ, sera de pouvoir traiter très rapidement les émissions de NOx après le démarrage du moteur. Les conditions de démarrage à froid, dites « froides » ne seront donc plus un problème puisque le système saura traiter les NOx indépendamment de la thermique provenant du moteur. Les conditions très variées de fonctionnement du moteur qui devront être respectées compte tenu des règlementations à venir, seront donc couvertes :
- une réduction des contraintes d'emplacement du FAP qui sera totalement indépendant du fonctionnement moteur (plus besoin de le rapprocher du moteur pour assurer les régénérations)
- un lancement des régénérations (activation du brûleur) chaque fois que nécessaire
- moins de risques de dilution d'huile car plus de besoin en post-injection pour la réalisation des exothermes
- un fonctionnement de la SCR même à basse température grâce à l'apport de chaleur par le brûleur (sur demande)

Par ailleurs, la consommation de carburant engendrée par le fonctionnement du brûleur sera compensée par :
- la suppression des phases de post-injection de carburant dans le moteur permettant l'élévation de température de la ligne d'échappement nécessaire à la régénération du filtre à particules
- la suppression de certains éléments du système de dépollution dont les masses sont non négligeables et qui génèrent donc une surconsommation de carburants, comme par exemple :
   * le réservoir d'additif d'aide à la régénération (3 à 5 kg),
   * le réservoir de réducteur embarqué et le système d'alimentation et d'injection à l'échappement (20 kg voire plus pour certaines applications).

Le filtre à particules selon l'invention (filtre SCRF-H₂) pourra être intégré au sein de l'une ou l'autre des configurations suivantes :
MOTEUR → DOC → SCRF-H₂ → ECHAPPEMENT
MOTEUR DOC → INJECTEUR HC → SCRF-H₂ → ECHAPPEMENT

## Revendications

1. Ligne d'échappement d'un véhicule automobile à moteur thermique, permettant l'évacuation d'un mélange gazeux fabriqué par le moteur en fonctionnement, comprenant :
- un catalyseur d'oxydation (DOC), et, disposé en aval de ce catalyseur d'oxydation dans le sens de cheminement des gaz depuis le moteur vers la sortie d'échappement du véhicule,
- un dispositif formant un filtre à particules et un catalyseur d'élimination des oxydes d'azote contenus dans un mélange gazeux issu d'un moteur thermique d'un véhicule automobile, et véhiculé vers une sortie d'échappement du véhicule, comprenant un catalyseur SCR mettant en oeuvre une réduction catalytique sélective des oxydes d'azote par un réducteur, et qui comprend, en amont du catalyseur SCR (15) dans le sens de cheminement des gaz depuis le moteur (20) vers la sortie d'échappement du véhicule, un catalyseur (16) de formation du réducteur des oxydes d'azote, qui est un catalyseur de formation d'hydrogène H₂, à partir du mélange gazeux à traiter et une source d'hydrocarbures craqués, et qui comprend des parois poreuses (5) de filtration des particules solides (10), le catalyseur SCR (15) et le catalyseur de formation du réducteur (16) étant imprégnés sur au moins certaines des parois poreuses (5) du filtre,
- ainsi qu'une source d'hydrocarbures craqués interposée entre le catalyseur d'oxydation et le filtre à particules du dispositif.

2. Ligne d'échappement selon la revendication précédente, **caractérisée en ce que** le catalyseur (15) de formation du réducteur hydrogène H₂ comprend un ou plusieurs catalyseurs de vaporéformage des hydrocarbures et/ou de gaz à l'eau à partir de CO.

3. Ligne d'échappement selon l'une des revendications précédentes, **caractérisée en ce que** le dispositif comprend des canaux entrants (2) et des canaux sortants (4) en alternance deux à deux, un canal entrant (2) étant séparé du canal sortant adjacent (4) par l'une des parois poreuses (5) du filtre, la couche de la paroi de séparation la plus proche du canal entrant étant imprégnée du catalyseur de formation du réducteur (16), et la couche de la paroi de séparation la plus proche du canal de sortie étant imprégnée du catalyseur SCR (15).

4. Ligne d'échappement selon l'une des revendications précédentes, **caractérisée en ce que** le catalyseur de formation d'hydrogène H₂ comprend du rhodium sur oxydes de cérium ou sur tout autre support réductible.

5. Ligne d'échappement selon l'une des revendications précédentes, **caractérisée en ce que** le catalyseur SCR comprend des zéolithes échangées au fer, au cuivre, et/ou des oxydes acides simples ou mixtes tels que des zircones acides.

6. Ligne d'échappement selon l'une des revendications précédentes, **caractérisée en ce que** la source d'hydrocarbures craqués comprend un brûleur.

7. Ligne d'échappement selon l'une des revendications précédentes, **caractérisée en ce qu'**elle comprend un substrat disposé en amont du filtre à particules dans le sens de cheminement des gaz depuis le moteur vers la sortie d'échappement du véhicule, imprégné d'un catalyseur de production du réducteur, notamment de H₂.

8. Ligne d'échappement selon la revendication précédente, **caractérisée en ce que** le catalyseur de production du réducteur est un catalyseur de vaporéformage des hydrocarbures.

## Patentansprüche

1. Abgasanlage eines Kraftfahrzeugs mit Wärmekraftmotor, die das Ableiten eines gasförmigen Gemischs erlaubt, das von dem Motor während des Betriebs erzeugt wird, die Folgendes umfasst:
- einen Oxidationskatalysator (DOC) und, stromabwärts dieses Oxidationskatalysators, in die Richtung des Beförderns der Gase ausgehend von dem Motor zu dem Auspuffausgang des Fahrzeugs,
- eine Vorrichtung, die ein Partikelfilter bildet, und einen Katalysator zum Eliminieren der Stickstoffoxide, die in dem gasförmigen Gemisch enthalten sind, das aus dem Wärmekraftmotor des Kraftfahrzeugs hervorgeht und zu einem Auspuffausgang des Fahrzeugs befördert wird, die einen SCR-Katalysator umfasst, der eine selektive katalytische Reduktion der Stickstoffoxide durch eine Reduziermittel umsetzt, und die stromaufwärts des SCR-Katalysators (15) in die Richtung des Beförderns der Gase von dem Motor (20) zu dem Auspuffausgang des Fahrzeugs einen Katalysator (16) zum Bilden des Reduziermittels der Stickstoffoxide umfasst, der ein Wasserstoff (H₂)-Bildungskatalysator ist, ausgehend von dem zu behandelnden gasförmigen Gemisch und einer Quelle gecrackter Kohlenwasserstoffe, und die porige Wände (5) zum Filtern der Feststoffteilchen (10) umfasst, wobei der SCR-Katalysator (15) und der Reduziermittelbildungskatalysator (16) auf mindestens bestimmten der porigen Wände (5) des Filters imprägniert sind,
- sowie eine Quelle gecrackter Kohlenwasserstoffe, die zwischen den Oxidationskatalysator und das Partikelfilter der Vorrichtung eingefügt ist.

2. Abgasanlage nach dem vorhergehenden Anspruch, **dadurch gekennzeichnet, dass** der Kohlenwasserstoff H₂-Reduziermittelbildungskatalysator (15) einen oder mehrere Dampfreformierungskatalysatoren der Kohlenwasserstoffe und/oder Gase ausgehend von CO umfasst.

3. Abgasanlage nach einem der vorhergehenden Ansprüche, **dadurch gekennzeichnet, dass** die Vorrichtung Eingangskanäle (2) und Ausgangskanäle (4) abwechselnd zu je zwei umfasst, wobei ein Eingangskanal (2) von dem benachbarten Ausgangskanal (4) durch eine der porigen Wände (5) des Filters getrennt ist, wobei die Schicht der Trennwand, die dem Eingangskanal am nächsten ist, durch den Reduziermittelbildungskatalysator (16) imprägniert ist, und die Schicht der Trennwand, die dem Ausgangskanal am nächsten ist, durch den SCR-Katalysator (15) imprägniert ist.

4. Abgasanlage nach einem der vorhergehenden Ansprüche, **dadurch gekennzeichnet, dass** der H₂-Wasserstoffbildungskatalysator Rhodium auf Ceriumoxiden oder auf irgendeinem anderen reduzierbaren Träger umfasst.

5. Abgasanlage nach einem der vorhergehenden Ansprüche, **dadurch gekennzeichnet, dass** der SCR-Katalysator Zeolithe umfasst, die mit Eisen, Kupfer ausgetauscht sind, und/oder einfache saure Oxide oder gemischte, wie zum Beispiel saure Zircone, umfasst.

6. Abgasanlage nach einem der vorhergehenden Ansprüche, **dadurch gekennzeichnet, dass** die Quelle gecrackter Kohlenwasserstoffe einen Brenner umfasst.

7. Abgasanlage nach einem der vorhergehenden Ansprüche, **dadurch gekennzeichnet, dass** diese Quelle ein Substrat umfasst, das stromaufwärts des Partikelfilters in die Förderrichtung der Gase von dem Motor zu dem Auspuffausgang des Fahrzeugs, mit einem Katalysator zur Produktion des Reduziermittels, insbesondere H₂ imprägniert, angeordnet ist.

8. Abgasanlage nach dem vorhergehenden Anspruch, **dadurch gekennzeichnet, dass** der Katalysator zur Produktion des Reduziermittels ein Dampfreformierungskatalysator der Kohlenwasserstoffe ist.

## Claims

1. An exhaust system of a motor vehicle with a heat engine, permitting the evacuation of a gaseous mixture produced by the engine in operation, including:
- an oxidation catalyst (DOC), and, disposed downstream of this oxidation catalyst in the direction of the path of the gases from the engine toward the exhaust outlet of the vehicle,
- a device forming a particulate filter and a catalyst for elimination of the nitrogen oxides contained in a gaseous mixture issued from a heat engine of a motor vehicle, and conveyed toward an exhaust outlet of the vehicle, including an SCR catalyst implementing a selective catalytic reduction of the nitrogen oxides by a reducer, and which includes, upstream of the SCR catalyst (15) in the direction of the path of the gases from the engine (20) toward the exhaust outlet of the vehicle, a formation catalyst (16) of the reducer of the nitrogen oxides, which is a hydrogen H₂ formation catalyst, from the gaseous mixture to be treated, and a source of cracked hydrocarbons, and which includes porous walls (5) for filtration of the solid particles (10), the SCR catalyst (15) and the formation catalyst of the reducer (16) being impregnated over at least certain of the porous walls (5) of the filter,
- and also a source of cracked hydrocarbons interposed between the oxidation catalyst and the particulate filter of the device.

2. The exhaust system according to the preceding claim, **characterized in that** the formation catalyst (15) of the hydrogen H₂ reducer includes one or several steam reformation catalysts of the hydrocarbons and/or of water gas from CO.

3. The exhaust system according to one of the preceding claims, **characterized in that** the device includes inlet ducts (2) and outlet ducts (4) alternating in pairs, an inlet duct (2) being separated from the adjacent outlet duct (4) by one of the porous walls (5) of the filter, the layer of the separation wall nearest to the inlet duct being impregnated with the formation catalyst of the reducer (16), and the layer of the separation wall nearest to the outlet duct being impregnated with the SCR catalyst (15).

4. The exhaust system according to one of the preceding claims, **characterized in that** the formation catalyst of hydrogen H₂ includes rhodium on cerium oxides or on any other reducible support.

5. The exhaust system according to one of the preceding claims, **characterized in that** the SCR catalyst includes zeolites exchanged with iron, with copper, and/or simple or mixed acid oxides such as acidic zirconias.

6. The exhaust system according to one of the preceding claims, **characterized in that** the source of cracked hydrocarbons includes a burner.

7. The exhaust system according to one of the preceding claims, **characterized in that** it includes a substrate disposed upstream of the particulate filter in the direction of the path of the gases from the engine toward the exhaust outlet of the vehicle, impregnated with a production catalyst of the reducer, in particular of H₂.

8. The exhaust system according to the preceding claim, **characterized in that** the production catalyst of the reducer is a steam reformation catalyst of the hydrocarbons.
